# EUROPEAN PATENT APPLICATION

(11) **EP 1 754 585 A1**
(43) Date of publication of application: **21.02.2007**
(21) Application number: 05107573.7
(22) Date of filing: 17.08.2005
(51) Int. Cl.: B29C 44/32

(54) **Method of and apparatus for manufacturing sandwich panels**

(71) Applicant: TNO Bedrijven B.V., 2628 VK Delft (NL); H.P.O. Helderse Project Ontwikkeling B.V., 1785 LX Den Helder (NL)
(72) Inventor: Gan, Michael, Daniël, 2613 RR, Delft (NL); Brouwer, Willem, Diederik, 2496 HG, Den Haag (NL); Veenendaal, Jan, 1788 AZ, Den Helder (NL)
(74) Representative: Metman, Karel Johannes

(57) **Abstract**

The invention relates to a method of manufacturing sandwich panels, in particular for concrete formwork, comprising a thermoplastic core (14) sandwiched between thermoplastic skins (4). It includes supplying skin sheets (4), supplying a core layer (5), positioning the core layer (5) between the skin sheets (4), introducing the core layer (5) and the skin sheets (4) between mould faces (9), applying a heating treatment to raise the temperature of the skin sheets (4) to adhere the skin sheets (4) to the core layer (5) so as to form the sandwich panel. The core layer (5) is heated as well during the heating treatment so as to form the core (14) of the panel at least partly simultaneously with the adhesion of the skins (4) to the core (14). The heating treatment is followed by a cooling treatment of the formed panel so as to maintain the dimensions of the formed panel. The invention also relates to an apparatus for manufacturing sandwich panels and to a formwork panel.

## Description

The invention relates to a method of manufacturing sandwich panels, in particular for concrete formwork, comprising a thermoplastic core sandwiched between thermoplastic skins, including the steps of:
supplying skin sheets,
supplying a core layer,
positioning the core layer between the skin sheets,
introducing the core layer and the skin sheets between mould faces,
applying a heating treatment to raise the temperature of the skin sheets to adhere the skin sheets to the core layer so as to form the sandwich panel. The invention also relates to an apparatus for manufacturing sandwich panels and a formwork panel.

Sandwich panels are known in the art. Panels comprising composite (fibre reinforced plastic) skins and a core of foam, for example, are widely used for applications where high stiffness and low weight are desired. Manufacturing methods of sandwich panels are also well-known. One of the known methods is described in the European patent application EP 1167657: skins are heated, after which they are laid onto the appropriate side of a core, which was produced in an earlier manufacturing process, and then a pressure is exerted. Applying this method leads to adhesion of the skins to the core. The disadvantages of the known art are that two separate manufacturing steps (1. manufacturing a core and 2. adhering the skins to the core) are required and that the core is compressed during the adhering process, which may result in deformation of the core.

It is an object of the present invention to simplify and improve the manufacturing method.

In order to achieve this object, the invention provides a method characterised in that the core layer is heated as well during the heating treatment so as to form the core of the panel at least partly simultaneously with the adhesion of the skins to the core, and the heating treatment is followed by a cooling treatment of the formed panel so as to maintain the dimensions of the formed panel. The advantage of this method is that the core is formed of the core layer and the skin sheets are adhered to the core in a single process. The cooling treatment cools down the formed panel, which was hot as a consequence of the heating treatment. The cooling treatment reduces the time period until the moment that the panel can be handled for further treatment without deformation.

The heating treatment is at least performed between the mould faces, which has the advantage that heat can be effectively transferred to the skin sheets and the core layer when they are together between the mould faces.

The core layer is supplied as a foamable thermoplastic layer, which foams up during the heating treatment. The advantage is that supplying a foamable layer is much easier and less voluminous than supplying a prefabricated core of foam.

Preferably the heating treatment is such that a temperature rise of the skins and the core layer is achieved, preferably to at least 200 °C. Above this temperature the skins and the core layer show (melting) properties at which the skin sheets adhere to the core layer and the core layer foams up.

The cooling treatment is a forced cooling when the panel is at least still between the mould faces, preferably until the panel temperature has reached an average temperature below about 100 °C. The cooling treatment is applied to keep the formed panel in the dimensions which it has obtained after expansion of the foam. The advantage of a forced cooling is that the production process can be accelerated.

In a preferred method the manufacturing steps defined herein before are performed continuously, forming a long panel in one direction which is cut in pieces in a next manufacturing step. With this manufacturing method a fast production process can be achieved.

The mould faces diverge after at least a part of the heating treatment to a distance which substantially equals the panel thickness. This enables the foaming-up core layer to expand. The mould faces have a constant distance to each other at least before the cooling treatment is started, whereas the distance is kept constant during at least a part of the cooling treatment. During the foaming process the foam will expand and press against the skin sheets. This improves the adhering process without applying an external pressure such as in prior art methods.

The invention also provides an apparatus for manufacturing sandwich panels as defined in claim 11. The advantage of the apparatus according to the invention is that sandwich panels can be manufactured by a continuous process, wherein the forming of a foam core as well as the adhesion of skin sheets to the core are performed by a single heating treatment.

The invention also provides a formwork panel, comprising a thermoplastic core sandwiched between thermoplastic skins wherein the core is preferably a polypropylene-based foam and the skins are preferably polypropylene-based fibre-reinforced sheets. The advantage of such a panel is that it has a low weight and high stiffness, which is particularly important for use and re-use as liner panels in concrete formwork. Furthermore, as the skins and foam are the same polymer adhesion properties are improved.

The invention will hereafter be elucidated with reference to the accompanying drawing.

Fig. 1 is a side view of an embodiment of an apparatus according to the invention, in which the manufacturing method according to the invention can be performed.

Fig. 2 is an enlarged view of detail II in Fig. 1 when the apparatus is in operation.

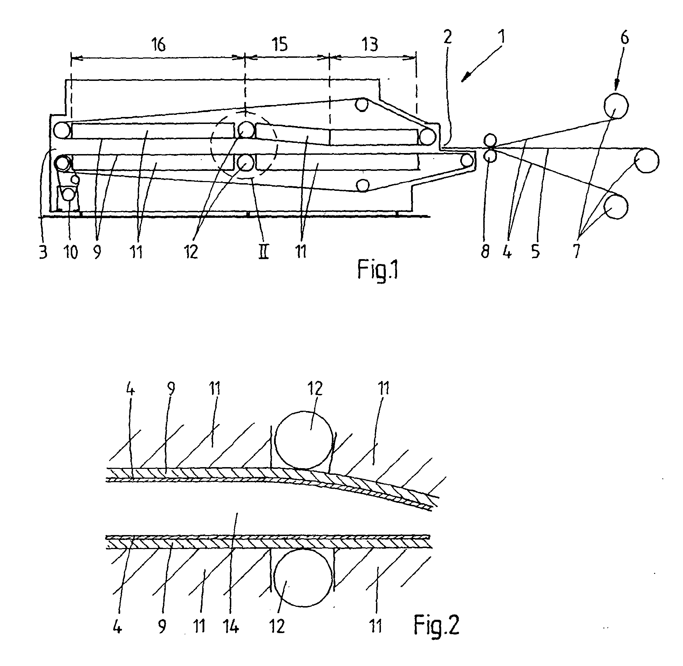

Fig. 1 shows a sketch of an embodiment of an apparatus with which a (semi) continuous sandwich panel can be manufactured. The continuous sandwich panel can be cut in pieces in a next manufacturing step (not shown). The resulting smaller panels can be used for applications such as liner panels for concrete formwork, for example. Sandwich panels can also be used for other purposes than concrete formwork, such as panels for scaffolding, cooling rooms, transport vehicles and interior walls in ships. It is known that sandwich panels have beneficial properties in terms of low weight, high stiffness and thermal insulation.

The embodiment of the apparatus shown in Fig. 1 applies a manufacturing method for sandwich panels, which comprise a thermoplastic core sandwiched between thermoplastic skins. The apparatus as shown comprises a conveyor 1, which has an input end 2 and an output end 3. The conveyor 1 receives supplied base materials 4, 5 from a supplying means 6 at the input end 2. The base materials 4, 5 include skin sheets 4 and a core layer 5. The supplying means 6 may include an unwinding system 6 for unwinding rollers 7 of the skin sheets 4 and a roller 7 of the core layer 5. The core layer 5 is positioned between the skin sheets 4 at a positioning means 8, such as two closely spaced rollers, before they are conveyed to the input end 2 of the conveyor 1. The base materials 4, 5 are conveyed and treated in the conveyor 1 and the formed panel is conveyed to an output end 3 of the conveyor 1.

The conveyor 1 comprises two flexible endless mould faces or belts 9, which are positioned opposite to each other. In operation, they are moved by driving means 10 such as an electric motor driving the belts through a transmission. In Fig. 1 the upper mould face 9 circulates clockwise and the lower one 9 circulates anti-clockwise. The mould faces 9 together form a space, in which the base materials 4, 5 and the formed panel are treated and conveyed, like in a double-belt press. The mould faces 9 can be supported by guiding means, such as supporting plates 11 and rollers 12.

The conveyor 1 comprises a heating treatment part 13 to raise the temperature of the skin sheets 4 and the core layer 5. The heating treatment is performed downstream of the input end 2 of the conveyor 1. The temperature in the heating treatment part 13 is increased such that the skin sheets 4 will adhere to the core layer 5 and the core layer 5 will foam up simultaneously. The temperature at which these processes occur simultaneously depends on material properties and may be higher than 200 °C. The core layer 5 and skin sheets 4 are preferably polypropylene-based materials. The skin sheets 4 may be a mix of 0-70 weight% Montell Moplen SM6150 and 0-30 weight% Montell Profax PF-814. The core layer 5 may be a mix of 0-70 weight% Montell Moplen SM6150 and 0-30 weight% Montell Profax PF-814 as well, but also includes an additive, for example 5-15 weight% Azodicarbonamide, which foams up the polypropylene-based materials at elevated temperature. The use of polypropylene is beneficial for the application in concrete formwork, because of its corrosion resistance against concrete. It is also a cheap base material. Furthermore, applying skins and foam of the same polymer improve adhesion properties. The skin sheets 4 are preferably supplied as fibre-reinforced sheets in order to obtain a high stiffness of the panels.

Between the input end 2 and the output end 3 of the conveyor 1 the mould faces 9 diverge to enable the foaming-up core layer 5 to expand so as to form a foam core 14 of the sandwich panel, see Fig. 2. The formed foam core 14 presses against the skin sheets 4. The expansion part of the conveyor 1 is denoted by 15 in Fig. 1. Pressing the formed foam 14 against the skin sheets 4 is beneficial for the adhering process between the skin sheets 4 and the foam core 14. The increase in spacing between the mould faces 9 when viewed in direction of conveyance substantially corresponds to the increase in volume of the core layer 5. The heating treatment may also continue during at least a part of the expansion part 13, which means that the heating treatment part 13 may at least partly overlap the expansion part 15 in Fig. 1.

When the foam core 14 is formed and the skin sheets 4 are adhered to the foam core 14 the formed panel is cooled down downstream of the expansion part 15 of the conveyor 1. The cooling treatment part is denoted by 16 in Fig. 1. The reason for cooling the panel when it is still between the mould faces 9 is to maintain the dimensions of the formed panel and to avoid deformation of the hot panel due to its thermoplastic properties. The panel is preferably cooled down to a temperature below about 100 °C, depending on material properties (such as melting point). The panel can be cooled by forced cooling, but it is also possible to elongate the cooling part 16 and apply natural cooling. This is a compromise between available room and desired cooling gradient.

The advantage of sandwich panels manufactured according to the present invention is that due to the simplified manufacturing method the price per panel surface is more or less equal to the price of prior art panels for concrete formwork, but they can be reused about 100 times instead of about 30 times with conventional panels.

The apparatus and manufacturing method according to the present invention are not limited to the embodiment disclosed in the drawing and description. It is for example also possible to supply other base materials for the skin sheets and the core layer, such as PE or PET. PET is a good alternative as it is widely available as recycled material from (soda) bottles. It is also possible to blend the base materials with fire-retardant materials. Other materials that can be added to the base materials are indicators which monitor the safety status of a panel, for example in the case of scaffolding where the bending of the panels can be monitored. Sandwich panels can also be manufactured in other shapes than described herein before. Skin sheets and core layer can be introduced between stationary mould faces to form a spatial (3D) shape. It is also possible to reshape flat panels by compression moulding. Possible products are for example helmets and automotive parts.

In general it is noted that, in this application, the expression "comprising" does not exclude other elements, and "a" or "an" does not exclude a plurality. Reference signs in the claims shall not be construed as limiting the scope thereof.

## Claims

1. Method of manufacturing sandwich panels, in particular for concrete formwork, comprising a thermoplastic core (14) sandwiched between thermoplastic skins (4), including the steps of:
supplying skin sheets (4),
supplying a core layer (5),
positioning the core layer (5) between the skin sheets (4),
introducing the core layer (5) and the skin sheets (4) between mould faces (9),
applying a heating treatment to raise the temperature of the skin sheets (4) to adhere the skin sheets (4) to the core layer (5) so as to form the sandwich panel,
**characterised in that** the core layer (5) is heated as well during the heating treatment so as to form the core (14) of the panel at least partly simultaneously with the adhesion of the skins (4) to the core (14), and that the heating treatment is followed by a cooling treatment of the formed panel so as to maintain the dimensions of the formed panel.

2. Method according to claim 1, wherein the heating treatment is performed when the skin sheets (4) and the core layer (5) are at least between the mould faces (9).

3. Method according to claim 2, wherein the core layer (5) is supplied as a foamable thermoplastic layer (5), which foams up during the heating treatment.

4. Method according to one of the preceding claims, wherein the skin sheets (4) and the core layer (5) are supplied as polypropylene-based sheets (4, 5).

5. Method according to one of the preceding claims, wherein the heating treatment is such that a temperature rise of the skins (4) and the core layer (5) is achieved, preferably to at least 200 °C.

6. Method according to one of the preceding claims, wherein the cooling treatment is a forced cooling when the panel is at least still between the mould faces (9), preferably until the panel temperature has reached an average temperature below about 100 °C.

7. Method according to one of the preceding claims, wherein the skin sheets (4) are supplied as fibre-reinforced sheets (4).

8. Method according to one of the preceding claims, wherein the steps are performed continuously, forming a long panel in one direction which is cut in pieces in a next manufacturing step.

9. Method according to claim 8, wherein the mould faces (9) move at the same speed and direction, similar to the speed and direction of the skin sheets (4) between the mould faces (9).

10. Method according to claim 9, wherein the mould faces (9) diverge after at least a part of the heating treatment to a distance which substantially equals the panel thickness, enabling the foaming-up core layer (5) to expand, and the mould faces (9) have a constant distance to each other at least before the cooling treatment is started, whereas the distance is kept constant during at least a part of the cooling treatment.

11. Apparatus for manufacturing sandwich panels, in particular for concrete formwork, comprising a thermoplastic core (14) sandwiched between thermoplastic skins (4), said apparatus comprising one or more of the following members:
a conveyor (1) conveying supplied base materials (4, 5) through treatment stations (13, 15, 16) and conveying the formed sandwich panel to an output of the conveyor (1), comprising an input (2) for receiving the supplied base materials (4, 5) and at least two flexible endless mould faces (9), each movable in the same direction from the input towards the output (3) of the conveyor (1),
means for supplying skin sheets (4) and a foamable core layer (5) to the input (2) of the conveyor (1),
means for positioning the core layer (5) between the skin sheets (4),
means for a heating treatment of the skin sheets (4) and the core layer (5) at least between the mould faces (9) so as to adhere the skin sheets (4) to the core layer (5) as well as to foam up the core layer (5) to form the core (14),
diverging mould faces (9) downstream of the heating treatment means, wherein the foaming-up core layer (5) can expand,
means for a cooling treatment of the formed panel.

12. Formwork panel, comprising a thermoplastic core (14) sandwiched between thermoplastic skins (4), wherein the core (14) is preferably a polypropylene-based foam and the skins (4) are preferably polypropylene-based fibre-reinforced sheets.
